(19) Europäisches Patentamt
European Patent Office
Office européen des brevets

(11) EP 0 633 289 B1

(12) EUROPEAN PATENT SPECIFICATION

(45) Date of publication and mention of the grant of the patent:
**28.10.1998 Bulletin 1998/44**

(51) Int Cl.[6]: **C08L 23/16**, C08L 23/10, C08L 23/04

(21) Application number: **94110608.0**

(22) Date of filing: **07.07.1994**

(54) **Partially cross-linked polyolefin composition**

Teilvernetzte Polyolefinzusammensetzung

Composition d'oléfine partiellement réticulée

(84) Designated Contracting States:
**AT BE DE DK FR GB IT NL SE**

(30) Priority: **07.07.1993 IT MI931468**

(43) Date of publication of application:
**11.01.1995 Bulletin 1995/02**

(73) Proprietor: **MONTELL NORTH AMERICA INC.**
**New Castle County Delaware (US)**

(72) Inventors:
- **Braga, Vittorio**
  **I-44100 Ferrara (IT)**
- **Scanavini, Luca**
  **I-44100 Ferrara (IT)**

(74) Representative: **Zumstein, Fritz, Dr. et al**
**Dr. F. Zumstein**
**Dipl.-Ing. F. Klingseisen**
**Bräuhausstrasse 4**
**80331 München (DE)**

(56) References cited:
**EP-A- 0 436 724**
**EP-A- 0 472 946**
**US-A- 4 247 652**
**US-A- 5 196 462**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 633 289 B1

## Description

The present invention relates to soft partially cross-linked polyolefin compositions having very low flexural modulus values.

Thanks to high elongation at break values which characterize them, together with good compression set and tension set values, the compositions of the present invention are suitable for the manufacture of soft and flexible products with good elastic properties, such as small tubes used in the medical field. Moreover, thanks to their high flowability in the molten state and their excellent workability in general, the above mentioned compositions can be adequately used in slush molding processes currently employed for the production of synthetic leathers to be used mainly in the automotive industry. The high elongation at break values allow one also to subject to thermoforming the extruded and/or calendered sheets obtained from the above mentioned compositions, without encountering problems related to thinning and loss of embossing in the folding areas like in cases, for example, when the product is used for covering instrument panels for automobiles.

The above mentioned characteristics and properties are obtained by subjecting to dynamic cross-linking heterophasic polyolefin compositions which are not cross-linked, said compositions containing crystalline propylene homopolymers or copolymers and elastomeric olefin polymers with a low ethylene content (less than or equal to 35% by weight in the fraction soluble in xylene at ambient temperature).

US-A-4,247,652 relates to foamed products obtained from partially cross-linked polyolefin compositions. The said compositions comprise (1) a cross-linked elastomer with high contents of ethylene and, optionally, (2) an uncross-linked elastomer with low contents of ethylene.

US patent 4,963,612 describes partially cross-linked polyolefin compositions comprising a polypropylene fraction which is not cross-linked and a partially cross-linked elastomer, wherein the uncross-linked fraction of said elastomer contains from 25 to 60% by weight of propylene, and from 40 to 75% by weight of ethylene, if the elastomer does not contain dienes. In fact, the elastomer is selected from ethylene/propylene and ethylene/propylene/diene copolymers. Therefore, the fraction of the above mentioned partially cross-linked polyolefin compositions which is soluble in xylene at ambient temperature and which, as shown in the examples, corresponds to the noncross-linked fraction of the elastomer, contains not less than 40% by weight of ethylene when the elastomer is an ethylene/propylene copolymer. The examples show that the above mentioned compositions display very low elongation at break values ranging from 250 to 410%. Other partially cross-linked polyolefin compositions are described in US patents 4,948,840 and 5,143,978. In the case of the above mentioned compositions too the fraction soluble in xylene at ambient temperature, substantially made up of the noncross-linked amorphous fraction of the elastomer, cannot contain less than 40% by weight of ethylene, because the amorphous fraction of the elastomer used in the preparation of said compositions comprises an ethylene/propylene copolymer containing from 40 to 70% of ethylene. The examples of the two patents mentioned above show that the partially cross-linked compositions obtained in this manner, same as those of US patent 4,963,612, have considerably low elongation at break values.

US patent 5,196,462 describes partially cross-linked polyolefin compositions having high elongation at break values (up to 560% in the examples). However, said values are obtained due to a high degree of cross-linking of the elastomer contained in the above mentioned compositions and to the presence of relatively high quantities of crystalline propylene polymer in said compositions. In particular, the 560% elongation at break value is obtained when the gel content in the cross-linked elastomer is 87.7%. Obviously so high cross-linking levels cause the polyolefin compositions to be inadequate for processes that require a high flowability of the polymer mass in the molten state, such as slush molding, for example. In particular, in the slush molding processes which are based on the deposition of polymer powders on hot molds, said powders must be able to melt easily and the melted polymer must coat the surface of said molds homogeneously, without voids or irregularities. High degrees of cross-linking make it very difficult to obtain the above mentioned results.

The partially cross-linked polyolefin compositions of the present invention exhibit elongation at break values higher than those of the compositions described in US patents 4,963,612, 4,948,840 and 5,143,978, and, moreover, as mentioned above, they have good compression set values and excellent processability, due in particular to the low content of cross-linked elastomer. Thus, it is possible to avoid adding extender oils, which are normally used to improve processability and the rheological and mechanical properties of the elastomeric polymers, but have the disadvantage of causing surface migration phenomena.

Therefore, the present invention provides partially cross-linked polyolefin compositions comprising (percentages by weight):

1) 5-50%, preferably 5-35%, of a propylene homopolymer or a copolymer of propylene with ethylene and/or a $CH_2$=CHR $\alpha$-olefin, wherein R is a $C_2$-$C_8$ alkyl radical, said copolymer containing over 85%, preferably over 95% of propylene;

2) 50-95%, preferably 65-95%, of a partially cross-linked elastomeric polymer which is partially soluble in xylene

at ambient temperature, containing ethylene, propylene, and/or a $CH_2$=CHR α-olefin, wherein R is a $C_2$-$C_8$ alkyl radical;

said polyolefin compositions containing from 20% to 92%, preferably from 40% to 80% of a fraction (I) soluble in xylene at ambient temperature, and containing ethylene, propylene, and/or a $CH_2$=CHR α-olefin, where R is a $C_2$-$C_8$ alkyl radical, said fraction (I) containing a quantity of ethylene lower than or equal to 35%, preferably from 30% to 15%, most preferably from 30% to 20%.

Moreover, preferably fraction (I) has an intrinsic viscosity in tetrahydronaphthalene at 135°C from 2 to 0.5 dl/g, more preferably from 1.5 to 0.8 dl/g.

By "partially cross-linked" it is meant that the degree of cross-linking, in terms of gel content with respect to the weight of the elastomeric copolymer fraction soluble in xylene at ambient temperature before cross-linking, is preferably less than or equal to 70%, most preferably less than 50%. The gel corresponds to the fraction of elastomeric copolymer which is rendered insoluble by virtue of the cross-linking.

Whenever used in this application the terms "soluble" or "insoluble" (in xylene at ambient temperature) are to mean "essentially soluble" or "essentially insoluble", respectively; preferably these terms are to mean "totally soluble" or "totally insoluble", respectively.

Examples of the above mentioned $CH_2$=CHR α-olefins wherein R is a $C_2$-$C_8$ alkyl radical are: 1-butene, 1-pentene, 4-methyl-1-pentene, 1-hexene, 1-octene.

Typically, the compositions of the present invention have a flexural modulus from 60 to 100 MPa, compression set (22h-70°C) from 55 to 65%, and elongation at break greater than 450%. Moreover, in the case where component (1) is a copolymer, the haze values are generally lower than 40%, preferably lower than 30%.

The partially cross-linked polyolefin compositions of the present invention are prepared by dynamic cross-linking, subjecting a blend of uncross-linked heterophasic polyolefin composition and a cross-linking agent to continuous mixing, said uncross-linked heterophasic polyolefin composition comprising (percentages by weight):

A) 5-50% of a crystalline propylene homopolymer or a crystalline copolymer of propylene with ethylene and/or a $CH_2$=CHR α-olefin, wherein R is a $C_2$-$C_8$ alkyl radical, said copolymer containing more than 85% of propylene;
B) 0-20% of a copolymer fraction containing ethylene, propylene and/or a $CH_2$=CHR α-olefin, wherein R is a $C_2$-$C_8$ alkyl radical, insoluble in xylene at ambient temperature;
C) 40-95% of a copolymer fraction of ethylene with propylene and/or $CH_2$=CHR α-olefin, wherein R is a $C_2$-$C_8$ alkyl radical, containing ethylene in quantities lower than or equal to 35%, preferably from 30% to 15%, most preferably from 30% to 20%, and soluble in xylene at ambient temperature.

Examples of the above mentioned uncross-linked heterophasic polyolefin compositions are described in published European patent application 472946. Preferably the ethylene content in fraction (B) is higher than or equal to 75% by weight, more preferably higher than or equal to 80% by weight, with respect to the total weight of (B). The total amount of ethylene copolymerized in the uncross-linked heterophasic polyolefin compositions and in the partially cross-linked compositions obtained therefrom may range for instance from 15% to 35% by weight. Moreover, the intrinsic viscosity of component (C) of the uncross-linked heterophasic polyolefin compositions generally ranges from 1.5 to 4 dl/g.

The above mentioned noncross-linked heterophasic polyolefin compositions can be prepared by blending components (A), (B) and (C) in the fluid state, i.e., above their softening or melting temperature, or by way of sequential polymerization in two or more stages in the presence of a highly stereospecific Ziegler-Natta catalyst. Examples of sequential polymerization processes are provided in published European patent application 472946. When the noncross-linked heterophasic polyolefin compositions are prepared by sequential polymerization, component (B) is present in quantities greater than or equal to 1% by weight. When said component (B) is present, it is preferable that the (B)/(C) weight ratio be lower than 0.4, in particular from 0.1 and 0.3. Moreover, it is preferable that the weight percentage of fraction (C), or of the sum of fractions (B) and (C), with respect to the total polyolefin composition, be from 50% to 90%, for instance from 65% to 80%.

Generally, any cross-linking agent known in the art can be used for the preparation of the partially cross-linked polyolefin compositions of the present invention. In particular one can use cross-linking agents comprising organic peroxides, preferably having a half-life in the ethylenepropylene-diene rubbers (EPDM) ranging from 3.3 to 20 minutes, more preferably from 7 to 18 minutes at 160°C.

Specific examples of peroxides are: 1,1'-bis(tert-butylperoxy)diisopropylbenzene; dicumyl peroxide; n-butyl-4,4'-bis(tert-butylperoxy)valerate; 2,5-di(tert-butylperoxy)2,5-dimethylhexane. The peroxides are generally used in quantities ranging from 0.5% to 5%, preferably from 1% to 3% by weight with respect to the total weight of the composition which is subjected to cross-linking.

One or more coadjuvants are used together with the peroxides. Preferred examples of coadjuvants are 1,2-polybutadiene, triallyl cyanurate, triallyl isocyanurate, ethylene glycol dimethylmethacrylate, divenylbenzene, and furan de-

rivatives of formula

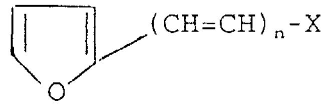

(I)

or

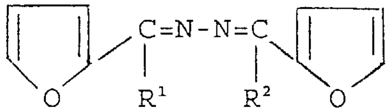

(II)

wherein X is a -CHO, -COOH, $-CHONH_2$, -CN, $-NO_2$, $-CH_2COCH_2COOR$, or $-CH(COOR)_2$ radical, wherein R is a $C_6$-$C_8$ aryl or a $C_1$-$C_4$ alkyl, n is 1 or 2, $R^1$ and $R^2$ are the same or different and are hydrogen $C_1$-$C_4$ alkyl or $C_5$-$C_8$ cycloalkyl.

1,2-polybutadiene has generally a molecular weight of at least 1300, preferably from 2400 to 13000. The content of the vinyl groups in 1,2 configuration preferably is greater than or equal to 50%, in particular from 50 to 90%.

Specific examples of furan derivatives of formulas (I) and (II) are: 1,5-difurfuryl-1,4-pentadiene-3-one; β(α-furyl) acrolein; 5-(α-furyl)pentadienal; α-furylacrylamide; α-furylacrylonitrile; β-(α-furyl)acrylic acid and its esters; furfurylidene esters. Generally the coadjuvants are used in quantities ranging from 0.1% to 8% by weight, preferably from 0.5% to 6% by weight with respect to the total weight of the composition which is subjected to cross-linking. Moreover, the cross-linking agent can contain further coadjuvants, such as phenylene-bis-maleimide and/or sulfur donors, such as mercaptobenzothiazole, benzothiazyl disulfide, tetramethylthiuram monosulfide, tetramethylthiuram disulfide, dipentamethylenethiuram hexasulfide, N,N'-diethylthiourea, amylphenol disulfide, zinc dibutyldithiocarbamate. The above mentioned further coadjuvants are added in quantities generally ranging from 0.5% to 5% by weight with respect to the weight of the composition which is subjected to cross-linking.

As previously stated, the partially cross-linked polyolefin compositions of the present invention are prepared by dynamic cross-linking. Said dynamic cross-linking consists of subjecting the above mentioned noncross-linked heterophasic polyolefin compositions to a blending process at a temperature higher than or equal to the softening or melting point of their components, in the presence of the cross-linking agent, which can be added before, during or after the first blending stage, continuing said blending during the cross-linking stage. The blending can be done in an internal mixer, in an extruder, or in a system comprising an internal mixer and an extruder.

The temperature at which the dynamic cross-linking process is carried out preferably ranges from 140°C to 220°C. Cross-linking times preferably range from 40 seconds to 6 minutes.

Mineral fillers, carbon black, dyes, plasticizers, stabilizing agents, extender oils, and all additives in general which are typical of polyolefin compositions containing elastomers, can be added to the composition which is subjected to mixing and dynamic cross-linking.

The partially cross-linked polyolefin compositions of the present invention can also be foamed and an additional advantage of the present invention is that from the partially cross-linked compositions one can obtain foamed polyolefin compositions having regularly shaped cells, not collapsed, having excellent mechanical properties (high elongation at break values, for example). Moreover, the products made from the above mentioned foamed polyolefin compositions have a smooth and regular surface.
The density of the foamed polyolefin compositions according to the present invention ranges preferably from 0.2 to 0.6 $g/cm^3$.

The above properties can easily be obtained due to the use of partially cross-linked polyolefin compositions of the present invention, without the need for adding extender oils.

To obtain foamed polyolefin compositions one can use processes and foaming agents commonly known in the art. In particular, one can use physical type foaming agents, such as hydrocarbons, optionally fluorinated and/or chlorinated, whose boiling point is above 25°C, for example pentane, hexane, dichlorotrifluoroethanes and methylene chloride, or gaseous or liquid compounds having a boiling point below 25°C, for example air, nitrogen, carbon dioxide, chlorofluoromethane, dichlorodifluoromethane, butane, propane and isobutane. Other foaming agents that can be used are the chemical types which develop gas either by thermal decomposition or by chemical reaction. Examples of chemical foaming agents are: azodicarbamide, barium azodicarboxylate, phenylsulfone, mixtures of sodium bicarbonate and citric acid, sodium borohydrate, gypsum and hydrated aluminas.

To prepare the foamed compositions extruders commonly known in the art can be used, including single-screw extruders. The physical type foaming agent is preferably injected or introduced into the melted polymer mass inside the extruder at a distance from the solid polymer feeding point where said polymer is in the form of a melted and homogeneous mass. The temperature in the section of the extruder where the foaming agent is introduced preferably ranges from 125°C to 250°C. The chemical type foaming agents can be mechanically blended with the solid polymer before extrusion. The dry blend thus obtained is then introduced into the first feeding area of the extruder, said area being maintained at a temperature from 130°C to 200°C. The temperature that is maintained at the extruder output, equipped with the proper die, e.g. a die with circular holes or a flat die, has to be adequate for the polymer to foam. Said temperature preferably ranges from 125°C to 180°C.

The quantity of physical foaming agent which is added to the polymer composition preferably ranges from 0.5% to 30% by weight with respect to the polymer composition, most preferably from 0.5% to 15%. The quantity of chemical foaming agent preferably ranges from 0.2% to 10%, more preferably from 0.3% to 5%.

One can also add to the polymer mass, either before or during extrusion, one or more nucleating agents (cellulation nucleants), in quantities generally ranging from 0.05% to 3% by weight with respect to the polymer. Examples of the above mentioned nucleating agents are talc and colloidal silica.

Other additives, dyes or fillers which may be required can also be added before or after extrusion.

The following examples are given in order to illustrate and not limit the present invention.

For the partially cross-linked compositions of the present invention, the data relative to the properties reported in the examples and text have been determined according to the methods indicated below. For the measurements requiring molded specimens, said specimens are obtained from 170x70x3 mm plates injection molded at 150°-180°C. The above specimens are cut parallel to the polymer flow lines in said plates.

| Property | Method |
|---|---|
| - Melt Index (M.I.) | ASTM-D 1238 L |
| - Ethylene % by weight | I.R. Spectroscopy |
| - Intrinsic viscosity | Determined in tetrahydronaphthalene at 135°C |
| - Tensile strength | ASTM D-412 |
| - Modulus 100% | ASTM D-412 |
| - Elongation at break | ASTM D-412 |
| - Tension set 100% | ASTM D-412 |
| - Hardness (Shore A) | ASTM D-2240 |
| - Flexural modulus at 23°C | Determined by DMTA dynamic-mechanical measuring device marketed by Polymer Laboratories, using a measuring frequency of 1 Hz. |
| - Compression set | ASTM D 395 method B |
| - Density | ASTM D 3575/W |
| - Haze | ASTM D 1003 |

- The percentage of soluble in xylene is determined by preparing a solution of the sample in xylene at a concentration of 1% by weight and maintaining said sample in xylene at 135°C under agitation for one hour. Afterwards, while still under agitation, the solution is allowed to cool to 95°C, after which it is poured in a bath which is heat regulated at 25°C where it is kept for 20 minutes without agitation and 10 minutes under agitation. The solution is then filtered and some acetone is added to a portion of the filtrate to obtain the precipitation of the dissolved polymer. The thus obtained polymer is recovered, washed, dried and weighed to determine the percentage of soluble in xylene.

Examples 1-7

An heterophasic polyolefin composition, obtained by sequential copolymerization in the presence of a high-yield and highly specific Ziegler-Natta catalyst supported on magnesium chloride, is partially cross-linked. Said composition [composition (a)] consists of the following components (percentages by weight):

A) 32% of a crystalline copolymer of propylene with ethylene, containing about 4% of ethylene;
B) 3% of a mainly linear ethylene/propylene copolymer, insoluble in xylene at ambient temperature, and containing about 15% of propylene;
C) 65% of a propylene/ethylene amorphous copolymer soluble in xylene at ambient temperature, having an intrinsic viscosity in tetrahydronaphthalene at 135°C equal to 2.95 dl/g and containing 30% of ethylene.

Moreover the above composition (a) possesses the following properties, measured with the previously described methods:

- M.I. (dg/min) 0.6
- Elongation at break (%) 850
- Flexural Modulus (MPa) 70
- Compression set (%) 87 (22h-70°)
- Haze (%) 45

The partial cross-linking is carried out dynamically operating in a Buss 70 mixer with a screw length/diameter ratio of 17. Composition (a) and the additives indicated in Table 1 are fed in the first blending zone. Connected to this blending zone is an area where the gas deriving from the decomposition of the peroxide are measured. The partial cross-linking is carried out through two consecutive blending zones.

The blending times and temperatures used in the cross-linking process of the examples range respectively from 45 to 120 seconds and from 140°C to 220°C.

The properties of the partially cross-linked compositions thus obtained are shown in Table 2. The percentages of composition (a) and the additives shown in Table 1, as well as the percentages of soluble in xylene and of ethylene in the soluble in xylene shown in Table 2, are weight percentages.

Table 1

| Example n. | 1 | 2 | 3 | 4 | 5 | 6 | 7 |
|---|---|---|---|---|---|---|---|
| Composition (a) (%) | 95.2 | 93.2 | 96.6 | 94.6 | 92.9 | 92.7 | 95.2 |
| Polybutadiene [(1)] (%) | 2 | 4 | 2 | 4 | 4 | 4 | |
| Trigonox 101/MD50[(2)] (%) | 2.8 | 2.8 | 1.4 | 1.4 | 2.8 | 2.8 | 2.8 |
| TAC[(3)] (%) | | | | | | | 2 |
| Irganox 1010[(4)] (%) | | | | | 0.15 | 0.1 | |
| Irgafos 168[(5)] (%) | | | | | 0.15 | 0.1 | |
| Chimassorb 944[(6)] (%) | | | | | | 0.3 | |

Note for Table 1

(1) Lithene PH liquid polybutadiene marketed by Revertex Ltd.
(2) 2,5-dimethyl-2,5-di(tert-butylperoxy)hexane marketed by Akzo.
(3) Triallyl cyanurate.
(4) pentaerythrityl-tetrakis[3(3,5-di-tert-butyl-4-hydroxyphenyl)propionate]
(5) tris(2,4-di-tert-butylphenyl)phosphite
(6) Oligomeric HALS marketed by Ciba-Geigy

Table 2

| Example n. | 1 | 2 | 3 | 4 | 5 | 6 | 7 |
|---|---|---|---|---|---|---|---|
| M.I. (dg/min) | 29 | 10 | 23 | 6 | 10 | 9 | 31 |
| Tensile strength (MPa) | 8 | 9.5 | 10.6 | 11 | 9.4 | 9.8 | 8.8 |
| Modulus 100% (MPa) | 4.9 | 6.6 | 5 | 6.1 | 6.5 | 6.8 | 6 |
| Elongation at break (%) | 570 | 510 | 865 | 530 | 510 | 520 | 550 |
| Tension set 100% (%) | 28 | 29 | 28 | 29 | 29 | 29 | 30 |
| Hardness (Shore A) (points) | 89 | 91 | 89 | 89 | 91 | 91 | 90 |
| Flexural Modulus at 23°C (MPa) | -- | 70 | -- | -- | -- | -- | -- |
| Compression set (%) (22h-70°C) | 62 | 60 | 79 | 65 | 60 | 59 | 67 |
| Compression set (%) (22h-100°C) | -- | 71 | -- | 72 | -- | -- | -- |
| Haze (%) | -- | 31 | -- | -- | -- | -- | 25 |
| Soluble in xylene (%) | 53 | 40 | 63 | 57 | 40 | 39 | 55 |
| Ethylene in soluble in xylene (%) | 30 | 30 | 30 | 30 | 30 | 30 | 30 |

From the data in Table 2 one can deduce that part of the elastomeric polymer present in composition (a) which comprises the sum of components (B) and (C) described above, has cross-linked. In fact, the solubility in xylene at ambient temperature is always lower than the quantity (65%) of component (C) present in composition (a) before cross-linking. At the same time the compression set is better than the one for composition (a). In Example 3 the cross-linking is minimal, but sufficient to improve the compression set value with respect to the one of composition (a) before cross-linking. The content of soluble in xylene after cross-linking is relatively high in all examples. The content of cross-linked elastomeric polymer in the compositions of the examples, therefore, is very low, which is an advantage in terms of workability. The intrinsic viscosity in the fraction soluble in xylene for the compositions of the examples ranges from 1.5 to 0.8 dl/g.

Since the fraction of copolymer (A) soluble in xylene at ambient temperature which is present in composition (a) before cross-linking is about 3% by weight, component (C), i.e. the amorphous elastomeric copolymer, basically corresponds to the fraction of composition (a) soluble in xylene at ambient temperature. Therefore one can estimate the quantity of gels which formed due to the cross-linking by means of the following formula:

$$\frac{C - X}{C} 100 = \text{gel percentage}$$

wherein C is the percentage of the above mentioned component (C) in composition (a), i.e. 65%, while X is the soluble fraction of the partially cross-linked composition obtained from (a).

The percentage of gels-calculated according to the above formula are shown in Table 3.

Table 3

| Ex. n. | 1 | 2 | 3 | 4 | 5 | 6 | 7 |
|---|---|---|---|---|---|---|---|
| gel % | 18.4 | 38.4 | 3 | 12.3 | 38.4 | 40 | 15.4 |

Example 8

The partially cross-linked polyolefin composition of Example 3 is foamed by coextrusion with 0.7% by weight of azodicarbamide Celogen AZ, marketed by Uniroyal Chemicals. The extruder used for this purpose is a Brabender with a screw length/diameter ratio of 25, a 20 mm screw diameter, a compression ratio of 1:3, and a cylindrical nozzle die with a 2 mm diameter. The extrusion temperature ranges from 130°C-180°C. The result is a foamed polymer strand with a smooth surface and with no collapsed cells. The density of the foamed polymer of 0.5 g/cm$^3$, and the elongation at break is 430%.

**Claims**

1. A partially cross-linked polyolefin composition comprising (percentages by weight):

    1) 5-50% of a crystalline propylene homopolymer or a copolymer of propylene with ethylene and/or a $CH_2$=CHR $\alpha$-olefin, wherein R is a $C_2$-$C_8$ alkyl radical, said copolymer containing more than 85% of propylene;
    2) 50-95% of a partially cross-linked elastomeric polymer partially soluble in xylene at ambient temperature, said partially cross-linked elastomeric polymer having a gel content with respect to the weight of the elastomeric copolymer fraction soluble in xylene at ambient temperature before cross-linking less than or equal to 70%; said partially cross-linked elastomeric polymer containing ethylene, propylene and/or a $CH_2$=CHR $\alpha$-olefin,

    wherein R is a $C_2$-$C_8$ alkyl radical;
    said composition containing from 20% to 92% of a fraction (I) soluble in xylene at ambient temperature and containing ethylene, propylene and/or a $CH_2$=CHR $\alpha$-olefin, wherein R is a $C_2$-$C_8$ alkyl radical, the ethylene being present in fraction (I) in quantities lower than or equal to 35%.

2. The composition of claim 1, wherein component I) is a crystalline copolymer of propylene with ethylene and/or a $CH_2$=CHR $\alpha$-olefin, wherein R is a $C_2$-$C_8$ alkyl radical, said copolymer containing more than 95% by weight of propylene.

3. The composition of claims 1 and 2, comprising 5-35% by weight of component I) and 65-95% by weight of component 2).

**4.** The composition of claim 1, wherein fraction (I) has an intrinsic viscosity in tetrahydronaphthalene at 135°C ranging from 2 to 0.5 dl/g.

**5.** A foamed polyolefin composition obtained by foaming a partially cross-linked polyolefin composition of claim 1 and having a density ranging from 0.2 to 0.6 g/cm$^3$.

**6.** A process for the preparation of a partially cross-linked polyolefin composition of claim 1 comprising subjecting to continuous mixing a blend of a uncross-linked heterophasic polyolefin composition and a cross-linking agent, said uncross-linked heterophasic polyolefin composition comprising (percentages by weight):

A) 5-50% of a crystalline propylene homopolymer or a crystalline copolymer of propylene with ethylene and/or a $CH_2$=CHR α-olefin, wherein R is a $C_2$-$C_8$ alkyl radical, said copolymer containing over 85% of propylene;
B) 0-20% of a copolymer fraction containing ethylene, propylene and/or a $CH_2$=CHR α-olefin, wherein R is a $C_2$-$C_8$ alkyl radical, insoluble in xylene at ambient temperature;
C) 40-95% of a copolymer fraction of ethylene with propylene and/or $CH_2$=CHR α-olefin, wherein R is a $C_2$-$C_8$ alkyl radical, containing ethylene in quantities lower than or equal to 35% and soluble in xylene at ambient temperature.

**7.** The process of claim 6, wherein the cross-linking agent comprises an organic peroxide and a coadjuvant.

**8.** The process of claim 7, wherein the peroxide is selected from those having a half-life in the ethylene-propylene-rubbers ranging from 3.3 to 20 minutes at 160°C, and the coadjuvant is selected from 1,2-polybutadiene, triallyl cyanurate, triallyl isocyanurate, ethylene glycol dimethyl methacrylate, divinylbenzene, and furan derivatives of formula

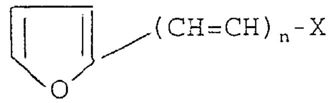

(I)

or

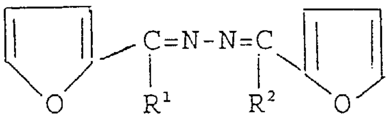

(II)

wherein X is a -CHO, -COOH, -$CHONH_2$, -CN, -$NO_2$, -$CH_2COCH_2COOR$ or -$CH(COOR)_2$ radical, wherein R is a $C_6$-$C_8$ aryl or a $C_1$-$C_4$ alkyl, n is 1 or 2, $R^1$ and $R^2$ are the same or different and are hydrogen $C_1$-$C_4$ alkyl or $C_5$-$C_8$ cycloalkyl.

**Patentansprüche**

**1.** Teilvernetzte Polyolefinzusammensetzung, umfassend (in Gewichtsprozenten):

1) 5 bis 50% eines kristallinen Propylenhomopolymeren oder eines Copolymeren von Propylen mit Ethylen und/oder einem α-Olefin $CH_2$=CHR, worin R für einen $C_{2-8}$-Alkylrest steht, wobei dieses Copolymere mehr als 85% Propylen enthält;
2) 50 bis 95% eines teilvernetzten, elastomeren Polymeren, das in Xylol bei Raumtemperatur teilweise löslich ist, wobei dieses teilvernetzte, elastomere Polymere einen Gelgehalt in bezug auf das Gewicht der bei Raumtemperatur in Xylol löslichen, elastomeren Copolymerfraktion vor dem Vernetzen von geringer als oder gleich 70% besitzt; wobei das teilvernetzte, elastomere Polymere Ethylen, Propylen und/oder ein α-Olefin $CH_2$=CHR enthält, worin R für einen $C_{2-8}$-Alkylrest steht;

wobei diese Zusammensetzung 20 bis 92% einer Fraktion (I), die bei Raumtemperatur in Xylol löslich ist und Ethylen, Propylen und/oder ein α-Olefin $CH_2$=CHR enthält, worin R für einen $C_{2-8}$-Alkylrest steht, umfaßt, wobei

Ethylen in Fraktion (I) in Mengen von geringer als oder gleich 35% vorhanden ist.

**2.** Zusammensetzung gemäß Anspruch 1, worin Komponente 1) ein kristallines Copolymeres von Propylen mit Ethylen und/ oder einem α-Olefin $CH_2$=CHR ist, worin R für einen $C_{2-8}$-Alkylrest steht, wobei dieses Copolymere mehr als 95 Gew.% Propylen enthält.

**3.** Zusammensetzung gemäß Anspruch 1 und 2, umfassend 5 bis 35 Gew.% Komponente 1) und 65 bis 95 Gew.% Komponente 2).

**4.** Zusammensetzung gemäß Anspruch 1, worin Fraktion (I) eine Intrinsikviskosität in Tetrahydronaphthalin bei 135°C im Bereich von 2 bis 0,5 dl/g besitzt.

**5.** Geschäumte Polyolefinzusammensetzung, erhalten durch Schäumen einer teilvernetzten Polyolefinzusammensetzung gemäß Anspruch 1, mit einer Dichte im Bereich von 0,2 bis 0,6 g/$cm^3$.

**6.** Verfahren zur Herstellung einer teilvernetzten Polyolefinzusammensetzung gemäß Anspruch 1, umfassend die Maßnahme eines kontinuierlichen Mischens einer Mischung einer nichtvernetzten, heterophasischen Polyolefinzusammensetzung und eines Vernetzungsmittels, wobei die nichtvernetzte, heterophasische Polyolefinzusammensetzung umfaßt (in Gewichtsprozenten):

A) 5 bis 50% eines kristallinen Propylenhomopolymeren oder eines kristallinen Copolymeren von Propylen mit Ethylen und/oder einem α-Olefin $CH_2$=CHR, worin R für einen $C_{2-8}$-Alkylrest steht, wobei das Copolymere mehr als 85% Propylen enthält;
B) 0 bis 20% einer Copolymerfraktion, enthaltend Ethylen, Propylen und/oder ein α-Olefin $CH_2$=CHR, worin R für einen $C_{2-8}$-Alkylrest steht, die in Xylol bei Raumtemperatur unlöslich ist;
C) 40 bis 95% einer Copolymerfraktion von Ethylen mit Propylen und/oder einem α-Olefin $CH_2$-CHR, worin R für einen $C_{2-8}$-Alkylrest steht, enthaltend Ethylen in Mengen geringer als oder gleich 35%, die in Xylol bei Raumtemperatur löslich ist.

**7.** Verfahren gemäß Anspruch 6, worin das Vernetzungsmittel ein organisches Peroxid und ein Coadjuvans umfaßt.

**8.** Verfahren gemäß Anspruch 7, worin das Peroxid unter denjenigen mit einer Halbwertszeit in den Ethylen-Propylen-Dien-Kautschuken im Bereich von 3,3 bis 20 Minuten bei 160°C ausgewählt wird, und das Coadjuvans unter 1,2-Polybutadien, Triallylcyanurat, Triallylisocyanurat, Ethylenglykoldimethylmethacrylat, Divinylbenzol und Furanderivaten der Formel

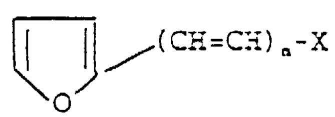

(I)

oder

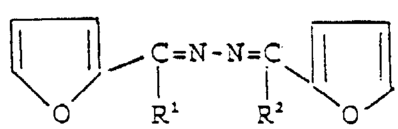

(II)

ausgewählt wird, worin X für einen Rest -CHO, -COOH, -$CHONH_2$, -CN, -$NO_2$, -$CH_2COCH_2COOR$ oder -CH $(COOR)_2$ steht, worin R $C_{6-8}$-Aryl oder $C_{1-4}$-Alkyl bedeutet, n für 1 oder 2 steht, $R^1$ und $R^2$, die gleich oder voneinander verschieden sein können, Wasserstoff, $C_{1-4}$-Alkyl oder $C_{5-8}$-Cycloalkyl bedeuten.

## Revendications

**1.** Une composition de polyoléfine partiellement réticulée comprenant (en pourcentages en poids):

1) 5-50% d'un homopolymère de propylène cristallin ou d'un copolymère de propylène et d'éthylène et/ou une α-oléfine $CH_2$=CHR, où R est un radical alkyle en $C_2$-$C_8$, ledit copolymère contenant plus de 85% de propylène;
2) 50-95% d'un polymère élastomère partiellement réticulé, partiellement soluble dans le xylène à la température ambiante, ledit polymère élastomère partiellement réticulé ayant une teneur en gel, par rapport au poids de la fraction de copolymère élastomère soluble dans le xylène à la température ambiante avant la réticulation, inférieure ou égale à 70%, ledit polymère élastomère partiellement réticulé contenant de l'éthylène, du propylène et/ou une α-oléfine $CH_2$=CHR où R est un radical alkyle en $C_2$-$C_8$;

ladite composition contenant de 20% à 92% d'une fraction (I) soluble dans le xylène à la température ambiante et contenant de l'éthylène, du propylène et/ou une α-oléfine $CH_2$=CHR où R est un radical alkyle en $C_2$-$C_8$, l'éthylène étant présent dans la fraction (I) en des quantités inférieures ou égales à 35%.

**2.** La composition selon la revendication 1, dans laquelle le composant 1) est un copolymère cristallin de propylène et d'éthylène et/ou une α-oléfine $CH_2$=CHR où R est un radical alkyle en $C_2$-$C_8$, ledit copolymère contenant plus de 95% en poids de propylène.

**3.** La composition selon les revendications 1 et 2, comprenant 5-35% en poids du constituant 1) et 65-95% en poids du constituant 2).

**4.** La composition selon la revendication 1, dans laquelle la fraction (I) présente une viscosité intrinsèque dans le tétrahydronaphtalène à 135°C comprise entre 2 et 0.5 dl/g.

**5.** Une composition de polyoléfine moussée obtenue par le moussage d'une composition de polyoléfine partiellement réticulée selon la revendication 1 et ayant une densité comprise entre 0,2 et 0,6 g/$cm_3$.

**6.** Un procédé de préparation d'une composition de polyoléfine partiellement réticulée selon la revendication 1 comprenant la soumission à un malaxage continu d'un mélange d'une composition de polyoléfines hétérophasique non-réticulée et d'un agent de réticulation, ladite composition de polyoléfine hétérophasique non-réticulée comprenant (en pourcentages en poids):

A) 5 à 50% d'un homopolymère de propylène cristallin ou d'un copolymère cristallin de propylène et d'éthylène et/ou d'une α-oléfine $CH_2$=CHR où R est un radical alkyle en $C_2$-$C_8$, ledit copolymère contenant plus de 85% en poids de propylène;
B) 0 à 20% d'une fraction de copolymère contenant de l'éthylène, de propylène et/ou une α-oléfine $CH_2$=CHR, où R est un radical alkyle en $C_2$-$C_8$, insoluble dans le xylène à la température ambiante;
C) 40 à 95% d'une fraction de copolymère d'éthylène et du propylène et/ou une α-oléfine $CH_2$=CHR, où R est un radical alkyle en $C_2$-$C_8$, contenant de l'éthylène en une quantité inférieure ou égale à 35% et soluble dans le xylène à la température ambiante.

**7.** Le procédé selon la revendication 6, dans lequel l'agent de réticulation comprend un peroxyde organique et un coadditif.

**8.** Le procédé selon la revendication 7, dans lequel le peroxyde est choisi parmi ceux qui présentent une demi-vie dans les caoutchoucs éthylène-propylènediène comprises entre 3,3 et 20 minutes à 160°C, et le coadditif est choisi parmi 1,2-polybutadiène, cyanurate de triallyle, isocyanurate de triallyle, éthylène glycol diméthyl méthacrylate, divinylbenzène et dérivés du furane de formule

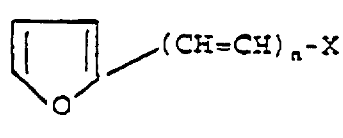

(I)

ou

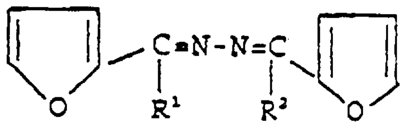

(II)

où X est un radical -CHO, -COOH, $-CHONH_2$, -CN, $-NO_2$, $-CH_2COCH_2COOR$ ou $-CH(COOR)_2$, où R est un aryle en $C_6$-$C_8$ ou un alkyle en $C_1$-$C_4$, n est égal à 1 ou 2, $R^1$ et $R^2$ sont identiques ou différents et sont des hydrogènes, des alkyles en $C_1$-$C_4$ ou des cycloalkyles en $C_5$-$C_8$.